# EUROPEAN PATENT SPECIFICATION

(11) **EP 4 488 609 B1**
(45) Date of publication and mention of the grant of the patent: **21.01.2026**
(21) Application number: 23461624.1
(22) Date of filing: 07.07.2023
(51) Int. Cl.: F28D 9/00, F28F 3/02, F28F 7/02

(54) **HEAT EXCHANGER CORE LAYER**
WÄRMETAUSCHERKERNSCHICHT
COUCHE CENTRALE D'ÉCHANGEUR DE CHALEUR

(43) Date of publication of application: 08.01.2025
(73) Proprietor: Hamilton Sundstrand Corporation, Charlotte, NC 28217 (US)
(72) Inventor: MECZKOWSKI, Tomasz, 51-317 Wroclaw (PL); KALUZA, Przemyslaw Stanislaw, 51-317 Wroclaw (PL); SIUDZINSKI, Hubert Jan, 51-317 Wroclaw (PL)
(74) Representative: Dehns

(56) References cited:
- EP-A1- 4 063 779
- WO-A1-2005/033607
- CN-A- 113 309 578
- US-B1- 6 807 059

## Description

### TECHNICAL FIELD

The present disclosure relates to a pin for a heat exchanger, a layer for a heat exchanger, a heat exchanger, and a method of making a layer for a heat exchanger.

### BACKGROUND

Heat exchangers are used in many fields and exist in many forms. Typically, heat exchangers involve the transfer of heat between a first and a second fluid flowing in adjacent channels or layers of the heat exchanger. Many heat exchanger designs have a flowpath defined between an inlet of the heat exchanger and an outlet of the heat exchanger, and between fluid flow layers separated by plates that extend between the inlet and outlet. Heat exchange to or from a fluid flowing in the flowpath occurs primarily through the plates. It is known to provide pins or fins that extend in the flowpath, between the plates, to improve the heat transfer and create turbulence in the fluid flow. Various pin or fin shapes are known including triangular or rectangular cross-sectional shapes.

Such conventional heat exchangers have generally been considered satisfactory for their intended purpose but there is a need in the art for improved heat exchangers.

EP 4 063 779 A1 for example discloses a pin according to the preamble of claim 1.

### SUMMARY

According to a first aspect, there is provided a pin for a core layer of a heat exchanger, the pin extending from a first pin end to a second pin end and having an outer surface between the first and second pin ends, wherein the pin comprises a plurality of surface indentations in the outer surface and a plurality of surface protrusions protruding from the outer surface.

Also provided is layer for a heat exchanger, the layer comprising: an inlet; an outlet; an upper sheet; a lower sheet; a fluid flowpath defined between the upper sheet and lower sheet and from the inlet to the outlet; and at least one pin disposed in the flowpath and connecting the upper sheet to the lower sheet; wherein the at least one pin has a first pin end and a second pin end and an outer surface between the first and second pin ends, wherein the pin includes a plurality of surface indentations in the outer surface and a plurality of surface protrusions protruding from the outer surface.

Defining a fluid flowpath between upper and lower sheets where the fluid flows past pins formed with such surface indentations such as recesses or dimples (can also be defined as a 'negative bubble') in its outer surface greatly and also surface protrusions or 'bumps' on the outer surface, increases the turbulence of the fluid flow in the flowpath. By increasing the turbulence of the fluid flow, the heat transfer of the heat exchanger layer is increased. Furthermore, the indentations and protrusions on the pins result in the pins having an increased primary heat transfer area compared to conventional/smooth pins, whilst minimising the pressure drop of the fluid passing the pin.

The layer may comprise a plurality of such pins disposed in the flowpath, each pin connecting between the upper sheet and lower sheet and having a pin height defined between the upper and lower sheet.

At least one of the upper sheet and the lower sheet may be formed from an aluminium alloy, a titanium alloy, an austenitic nickel-chromium-based superalloy, stainless steel or copper.

According to another aspect, there is provided a heat exchanger comprising a first layer and a second layer; wherein the first layer is a layer according to the preceding aspect; wherein the second layer is a layer according to the preceding aspect; and wherein the upper sheet of the second layer is also the lower sheet of the first layer.

The average distance between the upper and lower sheets of the first layer may be different from the average distance between the upper and lower sheets of the second layer. Put another way, the first layer may have a different average height from the second layer. The number of pins disposed in the flowpath of the first layer may be different from the number of pins disposed in the flowpath of the second layer.

A pin pattern of the pin(s) disposed in the flowpath of the first layer may be different from a pin pattern of the pin(s) disposed in the flowpath of the second layer.

According to another aspect, there is provided a method of manufacturing a layer for a heat exchanger, the method comprising: forming a lower sheet; additively manufacturing at least one pin on the lower sheet, the pin having a first pin end and a second pin end and an outer surface between the first and second pin end and further having surface indentations formed in the outer surface and surface protrusions protruding from the outer surface; and providing an upper sheet on top of the pin.

Using additive manufacturing allows pins to be created having the surface indentations in, and surface protrusions from, their outer surface. The method may comprise additively manufacturing a plurality of pins on the lower sheet.

The method may comprise providing a sidewall extending between the lower sheet and the upper sheet; and optionally additively manufacturing one or more sets of turning vanes on the lower sheet at the same time as additively manufacturing the or each pin.

Additively manufacturing the sidewall may be simpler than using traditional manufacturing techniques. Turning vanes may be desirable in layers having a non-straight flow path, e.g. a U-shaped flow path, and additively manufacturing these may be simpler than using traditional (non-additive) manufacturing techniques.

In an example, the sheets may also be manufactured using additive manufacture.

Each step of additive manufacturing may be performed using a metal powder bed SLM additive manufacturing process, or other AM methods.

A powder of the metal powder bed may be one of an aluminium alloy, a titanium alloy, and an austenitic nickel-chromium-based superalloy.

SLM is a relatively mature additive-manufacturing technology and typically allows recovery of unused (i.e. unmelted) powder from the finished article. The unused powder may be used in future additive-manufacturing operations and thus this method may be cost effective by minimizing wastage of (potentially expensive) metal powder.

The heat exchanger constructed in accordance with this aspect may have a compact design allowing for good heat exchange between fluids flowing in their respective pluralities of layers.

### BRIEF DESCRIPTION

Certain embodiments of the present disclosure will now be described in greater detail by way of example only and with reference to the accompanying drawings in which:
Figure 1 shows a perspective view of a heat exchanger;
Figure 2 shows a plan view of a layer within the heat exchanger;
Figure 3 shows a detailed view of pins according to the disclosure in the heat exchanger;
Figure 4 shows a single pin of the type according to the disclosure.

### DETAILED DESCRIPTION

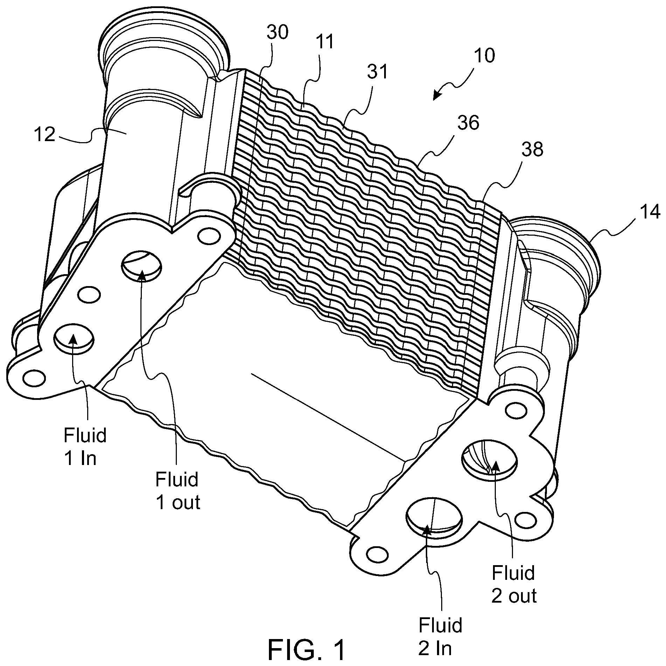

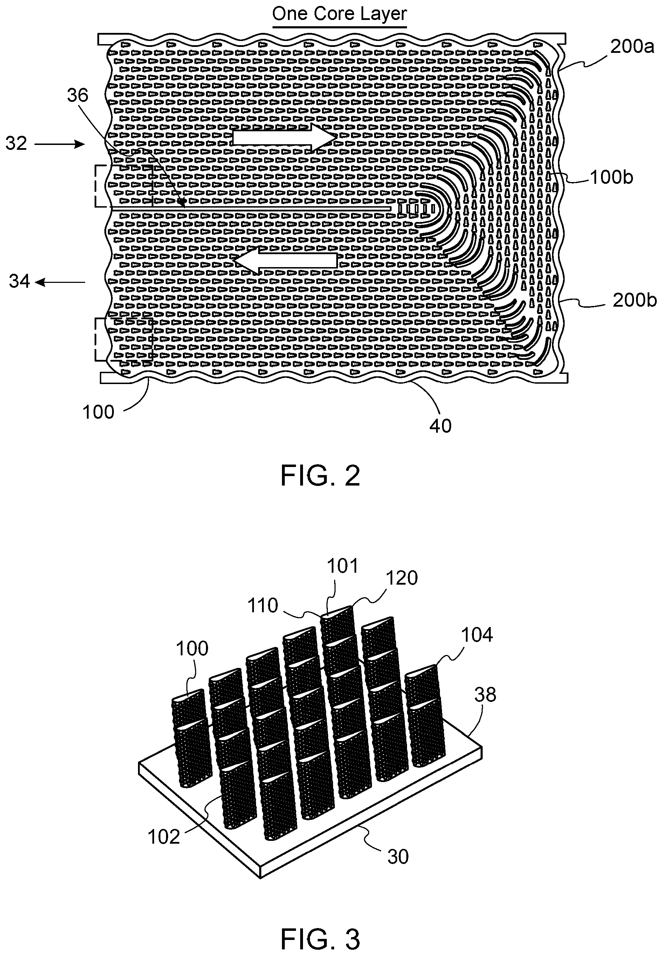

Figure 1 shows a heat exchanger 10 having a heat exchanger core 11, a first header 12 for conveying a first fluid e.g. oil into and out of the core 11, and a second header 14 for conveying a second fluid e.g. oil into and out of the core 11. The heat exchanger may be primarily used to exchange heat between the first fluid and the second fluid. However, heat may also be exchanged out through the sidewall 40 (Fig. 2) as well as out of the top and bottom sides of the heat exchanger core 11. The first and second fluids may be oil - in an oil-oil cooler (OOC), but other fluids, including water or air may also be used.

The first header 12 connects to a first plurality of layers 30 of the heat exchanger core 11. The second header 14 connects to a second plurality of layers 31 of the heat exchanger core 11. The first plurality of layers 30 is interleaved with the second plurality of layers 31 so that the first fluid flows through every second layer and the second fluid flows through the layers in-between the first fluid layers, providing alternate layers of first fluid flow and second fluid flow. The individual layers are typically rotated 180 degrees relative to each other. At least within the heat exchanger 10, the first fluid flowing in the first plurality of layers 30 is fluidly isolated from the second fluid flowing in the second plurality of layers by the sheets separating the layers. Fig. 2 shows one core layer 30. Any layer of the first and second pluralities of layers may be a layer 30 as shown in Figure 2.

As shown in Figure 2, the layer 30 comprises an inlet 32 and an outlet 34, a sidewall 40, and (not shown in Fig. 2) an upper sheet, and a lower sheet 38. In use, fluid is constrained by the upper sheet, lower sheet 38, and sidewall 40, so as to flow from the inlet 32, through the layer 30, to the outlet 34. That is, the upper sheet, lower sheet 38, and sidewall 40 together define a flowpath for fluid flowing in the layer 30. The layer 30 shown in Figure 2 defines a generally U-shaped flowpath, indicated by the arrows in Fig. 2, between the inlet 32 and outlet 34, with the inward flow separated from the outward flow by a separation bar 36. The upper sheet (not shown) of a given layer, may simultaneously function as the lower sheet 38 of layer (e.g. layer 30) immediately above.

With reference to Figure 1, a first portion of the first header 12 connects to the inlet side 32 of each layer 30 of the first plurality of layers, and, in use, fluid is pumped into the first portion and flows into the inlet side 32 of every layer connected to the first header 12. The fluid flows through each of the layers 30 and out through the outlet 34 of each layer of the first plurality of layers. The outlets 34 are all connected to a second portion of the first header 12, the second portion being fluidly isolated from the first portion. Fluid flows into the second portion and then out of the first header 12.

Similarly, a first portion of the second header 14 connects to the inlet side 32 of each layer 31 and, in use, fluid is pumped into the first portion and flows into the inlet side 32 of every layer connected to the second header 14. The fluid flows through each of the layers 31and out through the outlet 34 of each layer. The outlets 34 are all connected to the second portion of the second header 14, the second portion being fluidly isolated from the first portion. Fluid flows into the second portion and then out of the second header 14.

Within each layer 30, as shown in Figure 3, one or more pins 100 are disposed in the fluid flowpath. Each pin 100 extends between the lower sheet 38 and the upper sheet (not shown in Fig. 3).

Additionally, (best seen in Fig. 2) there may be provided within each layer 30 a first set of turning vanes 200a that may turn the flow through 90 degrees, and a second set of turning vanes 200b that may turn the flow through a further 90 degrees, to create the overall U-shaped flow path. A plurality of pins 100b may be disposed between the first and second sets of turning vanes 200a, b. The pins 100 shown in Figure 3 are all arranged within the layer 30 such that each pin 100 faces directly into a local flow direction.

Figure 3 shows the shape of the pins 100, 100b in more detail. In the direction from the lower sheet to the upper sheet or vice versa, the pins have pin body 101 extending between a first end 110 and a second end 120. The cross section of the pin 100, in the plane across the ends 110, 120 may take a variety of shapes e.g. triangular, rectangular, teardrop shaped., oval, circular, etc. The ability to manufacture the pins using additive manufacturing means that there is much more flexibility in the shapes that can be produced. The cross-section in the example shown is a teardrop or rounded triangle shape such that the width of the pin tapers in the direction of fluid flow.

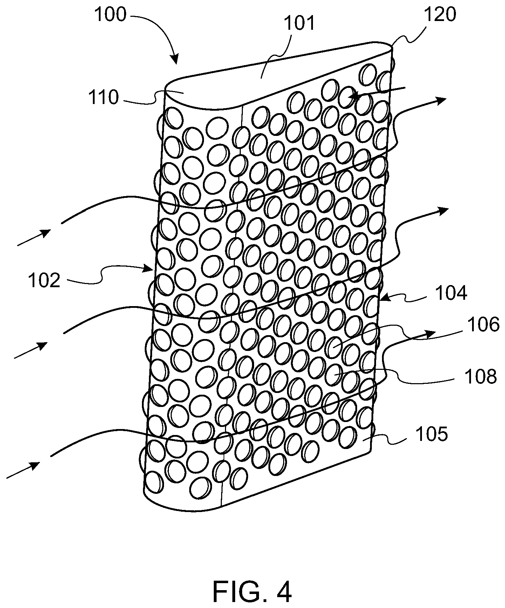

Figure 4 shows the shape of a pin 100 of a pin according to the disclosure. The pin has a leading edge 102 facing the fluid flow towards the pin, and a trailing edge 104, a first end 110 and a second end 120. The cross-sectional shape of the pin of this example is shown as a teardrop or rounded triangle shape such that the width of the pin tapers from the leading edge 102 to the trailing edge 104. This is just one example, and the pin can have other cross-sections. The arrows in Fig. 4 show the direction of fluid flow past the pin.

The body of the pin has an outer surface 105 between the first and second ends. A plurality of surface indentations or depressions 106 such as holes or 'negative bubbles' are provided on the outer surface 105 extending into the outer surface. In addition, a plurality of protrusions or 'bumps' 108 are formed on the outer surface. The indentations 106 and the protrusions 108 create turbulence in the fluid flow thus leading to improved thermal exchange. The indentations and the protrusions disturb the flow of the fluid causing a permanent disturbance of the velocity field, which results in intensive mixing of the fluid particles making the fluid more turbulent. This turbulence is magnified due to the plurality of pins in the layer. The increased turbulence increases the heat transfer coefficient and, thereby, the efficiency of the heat exchanger. Further, the indentations and the protrusions increase the surface area for the fluid, and hence the heat transfer area, of the pin compared to conventional pins which have a smooth outer surface. While protrusions provide these advantages, they do also result in an increase in pressure drop in the fluid as it flows across them. In order to reduce the overall pressure drop, therefore, the present design combines protrusions and indentations. The indentations act to counteract the increase in pressure drop caused by the protrusions resulting in a more acceptable (although typically still slightly higher than for a smooth surface pin) pressure drop. By using a combination of indentations and protrusions to create a non-smooth surface, rather than just adding features, there is no substantial increase in pin material and, therefore, associated cost, size and weight savings. This allows for a more compact heat exchanger.

**In** a heat exchanger core, as described above, several such layers will be provided, separated by the sheets. Fig. 2 shows just one such layer but the principle will be the same for each layer.

**In** the example shown, the indentations have a substantially circular concave shape and the protrusions have a substantially circular convex shape but other shapes are also possible. It is also not necessary that the pins have the same number, size and/or shape of protrusions and indentations.

**In** the example shown, the indentations 106 and the protrusions 108 are arranged in rows (here sloping relative to the direction of flow), with a row of indentations and a row of protrusions side-by-side, and several pairs of such rows across the entire outer surface 105 of the pin 100. This is, however, only one possible example, and the indentations and protrusions can be arranged in different patterns, different numbers and different sizes.

It is possible that the number of pins and/or the pattern in which the pins are arranged is the same for each layer, but it is also feasible that different layers have different numbers of pins and/or patterns of pins. The layers may also be the same height (defined between the sheets) or different layers may have different heights depending on the application.

The pins according to this design may or may not be used in the turnaround section of the heat exchanger.

Any or all parts of the heat exchanger 10 other than the pins may be made from metal. In some embodiments, some or all parts are made from an austenitic nickel-chromium-based superalloy, such as the Inconel family of metals manufactured by the Special Metals Corporation of New York state, USA. In other embodiments, some or all parts may be made from an aluminium alloy, a titanium alloy, stainless steel or copper.

The first and second fluids may be oil, such that the heat exchanger 10 is an oil-oil heat exchanger. However, in other embodiments, the first fluid may be different from the second fluid. Other fluids, including air, water, fuel(s), or carbon dioxide are also envisaged for either or both of the first and second fluids.

The pin design according to this disclosure has improved fluidic and thermal heat exchange properties compared to conventional smooth surface pins. Because of this, a heat exchanger can have fewer layers than is conventional to achieve the same performance. This provides cost, assembly, size and weight savings. By making the pins using additive manufacture, the precise design can be easily adjusted/modified according to the requirements of the application.

## Claims

1. A pin for a core layer of a heat exchanger past which fluid flowing through the layer passes, the pin (100) having a first and a second end and an outer surface between the first and second ends, and wherein a plurality of indentations are provided in the outer surface and **characterized in that** a plurality of protrusions are formed to protrude from the outer surface..

2. A pin according to claim 1, the pin having a cross-section that tapers from an inlet side of the pin to an outlet side of the pin.

3. The pin of claim 2, wherein the cross-section is a rounded triangular shape.

4. The pin of claims 1, 2 or 3, wherein the indentations have a substantially circular concave shape and/or the protrusions have a substantially circular convex shape.

5. The pin of any preceding claim, wherein the indentations are arranged in one or more rows and the protrusions are arranged in one or more rows, and optionally wherein the one or more rows of indentations are each adjacent a row of the one or more protrusions.

6. A layer for a heat exchanger, the layer comprising:
an inlet (32);
an outlet (34);
an upper sheet;
a lower sheet;
a fluid flowpath defined between the upper sheet and lower sheet and from the inlet to the outlet; and
at least one pin (100) as defined by any of claims 1 to 5, disposed in the flowpath and connecting the upper sheet to the lower sheet

7. The layer of claim 6, having a plurality of said at least one pin (100).

8. The layer of claim 7, the layer defining an inflow path from the inlet, and an outflow path to the outlet, the inflow path and the outflow path being separated in the layer by a separation bar, the inflow path and the outflow path each having a plurality of said pins, the layer further comprising a plurality of turning vanes to turn the direction of flow from the inflow path by substantially 180 degrees to the outflow path.

9. The layer of claim 8, wherein the plurality of turning vanes includes a first plurality of vanes to turn the direction of flow from the inflow path by substantially 90 degrees and a second plurality of turning vanes to turn the direction of flow by a further 90 degrees to the outflow path.

10. A heat exchanger comprising a first layer and a second layer;
wherein the first layer is a layer according to any of claims 6 to 9;
wherein the second layer is a layer according to any of claims 6 to 9; and
wherein the upper sheet of the second layer is also the lower sheet of the first layer.

11. The heat exchanger according to claim 10, wherein the number of pins disposed in the flowpath of the first layer is different from the number of pins disposed in the flowpath of the second layer.

12. A method of additively manufacturing a pin for layer for a heat exchanger, the method comprising:
additively manufacturing a pin as claimed in any of claims 1 to 5.

13. A method of manufacturing a layer for a heat exchanger comprising: providing a first sheet and a second sheet, additively manufacturing at least one pin according to the method of claim 12, and locating the at least one pin between the first and the second sheet such that the first end is located at the first sheet and the second end is located at the second sheet.

14. A method of manufacturing a heat exchanger, the method comprising:
manufacturing a first plurality of layers interleaved with a second plurality of layers, wherein each layer of the first and second pluralities of layers is manufactured via the method of claim 13;
manufacturing a first header fluidly connected to each of the first plurality of layers; and
manufacturing a second header fluidly connected to each of the second plurality of layers.

15. The method according to any of claims 12 to 14, wherein each step of additive manufacturing is performed using a metal powder bed SLM process or other additive manufacturing process, wherein a powder of the metal powder bed is one of an aluminium alloy, a titanium alloy, an austenitic nickel-chromium-based superalloy, stainless steel or copper.

## Patentansprüche

1. Stift für eine Kernschicht eines Wärmetauschers, an dem ein durch die Schicht strömendes Fluid vorbeiströmt, wobei der Stift (100) ein erstes und ein zweites Ende und eine Außenfläche zwischen dem ersten und dem zweiten Ende aufweist, und wobei eine Vielzahl von Vertiefungen in der Außenfläche bereitgestellt ist und **dadurch gekennzeichnet, dass** eine Vielzahl von Vorsprüngen gebildet ist, um von der Außenfläche hervorzustehen.

2. Stift nach Anspruch 1, wobei der Stift einen Querschnitt aufweist, der sich von einer Einlassseite des Stifts zu einer Auslassseite des Stifts verjüngt.

3. Stift nach Anspruch 2, wobei der Querschnitt eine abgerundete Dreiecksform ist.

4. Stift nach Anspruch 1, 2 oder 3, wobei die Vertiefungen eine im Wesentlichen kreisförmige konkave Form und/oder die Vorsprünge eine im Wesentlichen kreisförmige konvexe Form aufweisen.

5. Stift nach einem der vorhergehenden Ansprüche, wobei die Vertiefungen in einer oder mehreren Reihen angeordnet sind und die Vorsprünge in einer oder mehreren Reihen angeordnet sind, und wobei optional die eine oder mehreren Reihen von Vertiefungen jeweils benachbart zu einer Reihe des einen oder der mehreren Vorsprünge liegen.

6. Schicht für einen Wärmetauscher, wobei die Schicht Folgendes umfasst:
einen Einlass (32);
einen Auslass (34);
ein oberes Blech;
ein unteres Blech;
einen Fluidströmungsweg, der zwischen dem oberen Blech und dem unteren Blech und von dem Einlass zu dem Auslass definiert ist; und
mindestens einen Stift (100) nach einem der Ansprüche 1 bis 5,
der in dem Strömungsweg angeordnet ist und das obere Blech mit dem unteren Blech verbindet.

7. Schicht nach Anspruch 6, aufweisend eine Vielzahl des mindestens einen Stifts (100).

8. Schicht nach Anspruch 7, wobei die Schicht einen Zuflussweg von dem Einlass und einen Abflussweg zu dem Auslass definiert, wobei der Zuflussweg und der Abflussweg in der Schicht durch eine Trennleiste getrennt sind, wobei der Zuflussweg und der Abflussweg jeweils eine Vielzahl der Stifte aufweisen, wobei die Schicht ferner eine Vielzahl von Umlenkschaufeln umfasst, um die Strömungsrichtung von dem Zuflussweg um im Wesentlichen 180 Grad zu dem Abflussweg umzulenken.

9. Schicht nach Anspruch 8, wobei die Vielzahl von Umlenkschaufeln eine erste Vielzahl von Schaufeln beinhaltet, um die Strömungsrichtung von dem Zuflussweg um im Wesentlichen 90 Grad umzulenken, und eine zweite Vielzahl von Umlenkschaufeln, um die Strömungsrichtung um weitere 90 Grad zu dem Abflussweg umzulenken.

10. Wärmetauscher, umfassend eine erste Schicht und eine zweite Schicht;
wobei die erste Schicht eine Schicht nach einem der Ansprüche 6 bis 9 ist;
wobei die zweite Schicht eine Schicht nach einem der Ansprüche 6 bis 9 ist; und
wobei das obere Blech der zweiten Schicht zugleich das untere Blech der ersten Schicht ist.

11. Wärmetauscher nach Anspruch 10, wobei sich die Anzahl der in dem Strömungsweg der ersten Schicht angeordneten Stifte von der Anzahl der in dem Strömungsweg der zweiten Schicht angeordneten Stifte unterscheidet.

12. Verfahren zum additiven Fertigen eines Stifts für eine Schicht für einen Wärmetauscher, wobei das Verfahren Folgendes umfasst:
additives Fertigen eines Stifts nach Anspruch 1 bis 5.

13. Verfahren zum Fertigen einer Schicht für einen Wärmetauscher, umfassend:
Bereitstellen eines ersten Blechs und eines zweiten Blechs, additives Fertigen mindestens eines Stifts gemäß dem Verfahren nach Anspruch 12 und Positionieren des mindestens einen Stifts zwischen dem ersten und dem zweiten Blech, sodass das erste Ende an dem ersten Blech positioniert ist und das zweite Ende an dem zweiten Blech positioniert ist.

14. Verfahren zum Fertigen eines Wärmetauschers, wobei das Verfahren Folgendes umfasst:
Fertigen einer ersten Vielzahl von Schichten, die mit einer zweiten Vielzahl von Schichten verschachtelt sind, wobei jede Schicht der ersten und zweiten Vielzahl von Schichten mittels des Verfahrens nach Anspruch 13 gefertigt wird;
Fertigen eines ersten Verteilers, der mit jeder der ersten Vielzahl von Schichten fluidisch verbunden ist; und
Fertigen eines zweiten Verteilers, der mit jeder der zweiten Vielzahl von Schichten fluidisch verbunden ist.

15. Verfahren nach einem der Ansprüche 12 bis 14, wobei jeder Schritt des additiven Fertigens unter Verwendung eines Metallpulverbett-SLM-Verfahrens oder eines anderen additiven Fertigungsverfahrens durchgeführt wird, wobei ein Pulver des Metallpulverbetts eines von einer Aluminiumlegierung, einer Titanlegierung, einer austenitischen Superlegierung auf NickelChrom-Basis, rostfreiem Stahl oder Kupfer ist.

## Revendications

1. Ergot pour une couche de noyau d'un échangeur de chaleur le long duquel passe un fluide s'écoulant à travers la couche, l'ergot (100) ayant des première et seconde extrémités et une surface extérieure entre les première et seconde extrémités, et dans lequel une pluralité d'indendations sont prévues dans la surface extérieure et **caractérisé en ce qu'**une pluralité de saillies sont formées de façon à faire saillie de la surface extérieure.

2. Ergot selon la revendication 1, l'ergot ayant une section transversale qui se rétrécit d'un côté entrée de l'ergot à un côté sortie de l'ergot.

3. Ergot selon la revendication 2, dans lequel la section transversale est une forme triangulaire arrondie.

4. Ergot selon les revendications 1, 2 ou 3, dans lequel les indentations ont une forme concave sensiblement circulaire et/ou les saillies ont une forme convexe sensiblement circulaire.

5. Ergot selon une quelconque revendication précédente, dans lequel les indentations sont disposées en une ou plusieurs rangées et les saillies sont disposées en une ou plusieurs rangées, et éventuellement dans lequel la ou les rangées d'indentations sont chacune adjacentes à une rangée de la ou des saillies.

6. Couche pour un échangeur de chaleur, la couche comprenant :
une entrée (32) ;
une sortie (34) ;
une feuille supérieure ;
une feuille inférieure ;
un chemin d'écoulement de fluide défini entre la feuille supérieure et la feuille inférieure et de l'entrée à la sortie ; et
au moins un ergot (100) selon l'une quelconque des revendications 1 à 5, disposé dans le chemin d'écoulement et
reliant la feuille supérieure à la feuille inférieure.

7. Couche selon la revendication 6, ayant une pluralité dudit au moins un ergot (100).

8. Couche selon la revendication 7, la couche définissant un chemin de débit entrant depuis l'entrée, et un chemin de débit sortant vers la sortie, le chemin de débit entrant et le chemin de débit sortant étant séparés dans la couche par une barre de séparation, le chemin de débit entrant et le chemin de débit sortant ayant chacun une pluralité desdits ergots, la couche comprenant également une pluralité d'aubes tournantes pour faire tourner la direction d'écoulement du chemin de débit entrant de sensiblement 180 degrés vers le chemin de débit sortant.

9. Couche selon la revendication 8, dans laquelle la pluralité d'aubes tournantes comporte une première pluralité d'aubes pour faire tourner la direction d'écoulement du chemin de débit entrant de sensiblement 90 degrés et une seconde pluralité d'aubes tournantes pour faire tourner la direction d'écoulement d'encore 90 degrés vers le chemin de débit sortant.

10. Échangeur de chaleur comprenant une première couche et une seconde couche ;
dans lequel la première couche est une couche selon l'une quelconque des revendications 6 à 9 ;
dans lequel la seconde couche est une couche selon l'une quelconque des revendications 6 à 9 ; et
dans lequel la feuille supérieure de la seconde couche est également la feuille inférieure de la première couche.

11. Échangeur de chaleur selon la revendication 10, dans lequel le nombre d'ergots disposés dans le chemin d'écoulement de la première couche est différent du nombre d'ergots disposés dans le chemin d'écoulement de la seconde couche.

12. Procédé de fabrication additive d'un ergot pour une couche pour un échangeur de chaleur, le procédé comprenant :
la fabrication additive d'un ergot selon l'une quelconque des revendications 1 à 5.

13. Procédé de fabrication d'une couche pour un échangeur de chaleur, comprenant :
la fourniture d'une première feuille et d'une seconde feuille,
la fabrication additive d'au moins un ergot selon le procédé selon la revendication 12, et le positionnement de l'au moins un ergot entre la première et la seconde feuille de telle sorte que la première extrémité soit située au niveau de la première feuille et que la seconde extrémité soit située au niveau de la seconde feuille.

14. Procédé de fabrication d'un échangeur de chaleur, le procédé comprenant :
la fabrication d'une première pluralité de couches entrelacées avec une seconde pluralité de couches, dans lequel chaque couche des première et seconde pluralités de couches est fabriquée par le procédé selon la revendication 13 ;
la fabrication d'un premier collecteur relié fluidiquement à chacune de la première pluralité de couches ; et
la fabrication d'un second collecteur relié fluidiquement à chacune de la seconde pluralité de couches.

15. Procédé selon l'une quelconque des revendications 12 à 14, dans lequel chaque étape de fabrication additive est exécutée à l'aide d'un processus SLM sur lit de poudre métallique ou d'un autre processus de fabrication additive, dans lequel une poudre du lit de poudre métallique est l'un d'un alliage d'aluminium, d'un alliage de titane, d'un superalliage austénitique à base de nickel-chrome, d'un acier inoxydable ou du cuivre.
